# EUROPÄISCHE PATENTSCHRIFT

(11) **EP 4 370 386 B1**
(45) Veröffentlichungstag und Bekanntmachung des Hinweises auf die Patenterteilung: **06.08.2025**
(21) Anmeldenummer: 22733353.1
(22) Anmeldetag: 08.06.2022
(51) Int. Cl.: B60R 25/24, H04W 4/02

(54) **VERFAHREN ZUM AUTORISIEREN DES ZUGANGS ZU EINEM KRAFTFAHRZEUG MITTELS EINES MOBILEN ELEKTRONISCHEN IDENTIFIKATIONSGEBERS**
METHOD FOR AUTHORIZING ACCESS TO A MOTOR VEHICLE BY MEANS OF A MOBILE ELECTRONIC IDENTIFICATION DEVICE
PROCÉDÉ D'AUTORISATION D'ACCÈS À UN VÉHICULE AUTOMOBILE AU MOYEN D'UN DISPOSITIF D'IDENTIFICATION ÉLECTRONIQUE MOBILE

(30) Priorität: 13.07.2021 DE 102021003616
(43) Veröffentlichungstag der Anmeldung: 22.05.2024
(73) Patentinhaber: Mercedes-Benz Group AG, 70372 Stuttgart (DE)
(72) Erfinder: BETZ, Konrad, 70176 Stuttgart (DE); REINHARDT, Matthias, 71067 Sindelfingen (DE); LEICHT, Marco, 75242 Neuhausen (DE)
(74) Vertreter: Novagraaf Group
(86) Internationale Anmeldenummer: PCT/EP2022/065538
(87) Internationale Veröffentlichungsnummer: WO 2023/285036

(56) Entgegenhaltungen:
- US-A1- 2020 198 580
- US-A1- 2021 179 014

## Beschreibung

Die Erfindung betrifft ein Verfahren zum Autorisieren des Zugangs zu einem Kraftfahrzeug mittels eines mobilen elektronischen Identifikationsgebers sowie eine Anordnung aus einem Kraftfahrzeug und einem Identifikationsgeber, die zur Durchführung dieses Verfahrens eingerichtet/programmiert ist.

Mobile elektronische Identifikationsgeber werden eingesetzt, um als Alternative zum mechanischen Fahrzeugschlüssel die Autorisierung zum Zugang zu einem Kraftfahrzeug zu ermöglichen. In der Regel werden zur Kommunikation des Identifikationsgebers mit dem Kraftfahrzeug Funksysteme im Niederfrequenzbereich eingesetzt. Dadurch lassen sich Authentifizierungsdaten drahtlos übertragen. Bekannt ist vor diesem Hintergrund die Verwendung einer Funkverbindung gemäß dem sogenannten UWB-Standard. Mittels einer solchen Kommunikationsverbindung gemäß UWB-Standard ist es nicht nur möglich, Daten zwischen dem Identifikationsgeber und dem Kraftfahrzeug zu übertragen. Eine solche UWB-Verwindung erlaubt es auch, einen momentanen Abstand des Identifikationsgebers zum Kraftfahrzeug mit relativ hoher Genauigkeit zu ermitteln und an das Kraftfahrzeug zu übertragen.

Hierzu können Verfahren, beispielsweise das "Ping-Pong"-Verfahren oder das sogenannte "Polling"-Verfahren angewandt werden. Diese Verfahren basieren darauf, für zwischen dem Identifikationsgeber und dem Kraftfahrzeug übertragene Signale die benötigte Signal-Übertragungsdauer zu bestimmen und aus dieser Übertragungsdauer den gesuchten Abstand zwischen Kraftfahrzeug und Identifikationsgeber zu berechnen.

Als nachteilig an einer solchen UWB-Verbindung erweist sich jedoch deren relativ hoher elektrischer Leistungsbedarf bei relativ geringer Reichweite.

Aus herkömmlichen Kraftfahrzeugen, deren Zugang mit mobilen Identifikationsgebern autorisiert werden kann, ist es vor diesem Hintergrund bekannt, die drahtlose Übertragung von Autorisierungsinformationen zusätzlich zur UWB-Verbindung mittels einer weiteren Funkverbindung gemäß dem sogenannten BLE-Standard ("Bluetooth Low Energy-Standard") umzusetzen. Eine Kommunikationsverbindung gemäß dem BLE-Standard besitzt gegenüber einer Kommunikationsverbindung gemäß dem UWB-Standard den Vorteil einer größeren Reichweite bei gleichzeitig geringerem elektrischem Leistungsbedarf. Allerdings erlaubt die BLE-Verbindung im Gegensatz zur UWB-Verbindung keine genaue Positions- bzw. Abstandsbestimmung der Identifikationsgeber relativ zum Kraftfahrzeug.

Diese Eigenschaften der BLE-Verbindung werden bei dem in der US 2019 0263356 A1 beschriebenen Autorisierungsverfahren ausgenutzt. Demnach wird bei Annäherung des Identifikationsgebers an das Kraftfahrzeug die UWB-Kommunikationsverbindung mithilfe der BTE-Kommunikations-verbindung aktiviert. Hierzu wird die Signalstärke des der BLE-Verbindung zwischen dem Kraftfahrzeug und dem Identifikationsgeber ausgewertet und bei Überschreitung eines bestimmten Schwellwerts der Signalstärke die UWB-Verbindung aktiviert. Mittels besagter UWB-Verbindung wird dann der Abstand zwischen Kraftfahrzeug und Identifikationsgeber berechnet, sodass bei Unterschreiten eines bestimmten Mindestabstands im Kraftfahrzeug bestimmte Aktionen ausgelöst werden können.

Als problematisch erweist sich jedoch in der Praxis bei diesem Verfahren die Festlegung eines geeigneten Referenzwerts der Signalstärke der BLE-Verbindung, da diese Signalstärke stark von einer Vielzahl von verschiedenen Umgebungsbedingungen abhängen kann.

Aus der US 2020/198580 A1 ist ein passives Zugangssystem für ein Fahrzeug bekannt. Das passive Zugangssystem umfasst einen tragbaren Schlüsselanhänger und eine am Fahrzeug angeordnete Kommunikations- und Steuereinheit, wobei die Kommunikations- und Steuereinheit zur Steuerung einer Funktion des Fahrzeugs konfiguriert ist. Der tragbare Anhänger und die Kommunikations- und Steuereinheit sind für die Kommunikation über Ultrabreitbandsignale (UWB) untereinander konfiguriert. Wenn die Funktion des Fahrzeugs ausgelöst wird, leitet die Kommunikations- und Steuereinheit eine beidseitige UWB-Entfernungsmessungssitzung mit dem tragbaren Anhänger ein, wobei
- der tragbare Anhänger eine erste Entfernung zwischen dem tragbaren Anhänger und der Kommunikations- und Steuereinheit bestimmt und
- die Kommunikations- und Steuereinheit eine zweite Entfernung zwischen dem tragbaren Anhänger und der Kommunikations- und Steuereinheit bestimmt.

Die Kommunikations- und Steuereinheit ist dazu ausgebildet, eine Steuerung der Funktion des Fahrzeugs zu verhindern, wenn ein aus dem ersten und zweiten Abstand ermittelter Endabstand größer als der vorgegebene Abstand ist.

Weiterhin ist aus der US 2021/179014 A1 eine Fahrzeugsteuervorrichtung bekannt. Die Fahrzeugsteuervorrichtung umfasst eine Fahrzeugkommunikationssteuereinheit, die eine Kommunikation mit einem mobilen Endgerät durchführt, das sich in einem Kommunikationsbereich außerhalb des Fahrzeugs befindet. Weiterhin umfasst die Fahrzeugsteuervorrichtung eine Entfernungsmesseinheit, die eine Entfernung zwischen einem Fahrzeug und dem mobilen Endgerät misst. Weiterhin umfasst die Fahrzeugsteuervorrichtung eine Entfernungsmesssteuereinheit, die die Entfernung zwischen dem Fahrzeug und dem mobilen Endgerät misst, indem sie basierend auf einer vorbestimmten Bedingung zwischen einem ersten Entfernungsmessmodus, in dem die Entfernung zwischen dem Fahrzeug und dem mobilen Endgerät wiederholt durch die Entfernungsmesseinheit gemessen wird, ohne vom Empfang von Messanweisungsinformationen abhängig zu sein, die von dem mobilen Endgerät übertragen werden, und einem zweiten Entfernungsmessmodus umschaltet, in dem die Entfernung zwischen dem Fahrzeug und dem mobilen Endgerät durch die Entfernungsmesseinheit als Reaktion auf den Empfang der Messanweisungsinformationen gemessen wird, wenn eine Kommunikation zwischen der Fahrzeugkommunikationssteuereinheit und dem mobilen Endgerät hergestellt ist.

Es ist daher eine Aufgabe der vorliegenden Erfindung, ein verbessertes Verfahren zum Autorisieren des Zugangs zu einem Kraftfahrzeug mittels eines mobilen elektronischen Identifikationsgebers zu schaffen, welches voranstehend erläuterter Problematik Rechnung trägt.

Diese Aufgabe wird durch den Gegenstand der unabhängigen Patentansprüche gelöst. Bevorzugte Ausführungsformen sind Gegenstand der abhängigen Patentansprüche.

Grundidee der Erfindung ist demnach, die Abnahme Signalstärke der BLE-Verbindung zu überwachen, während der Identifikationsgeber vom Kraftfahrzeug wegbewegt wird und die momentan gemessene Signalstärke als Referenzwert zu speichern, wenn die UWB-Verbindung die maximale Reichweite überschreitet, so dass die UWB-Verbindung unterbrochen, also deaktiviert wird. Aufgrund der größeren Reichweite bleibt die BLE-Verbindung dabei noch aktiv.

Nähert sich der Identifikationsgeber zu einem späteren Zeitpunkt wieder dem Kraftfahrzeug an, so wird zunächst die eine längere Reichweite aufweisende BLE-Verbindung aktiv, so dass die - aufgrund des abnehmenden Abstands des Identifikationsgebers zum Kraftfahrzeug - zunehmende Signalstärke der BLE-Verbindung überwacht werden. Erreicht oder überschreitet die Signalstärke den zuvor gespeicherten Referenzwert, die erste Kommunikationsverbindung, also die UWB-Verbindung, wieder aktiviert, um mittels dieser - als Teil des Autorisierungsvorgangs - den momentanen Abstand des Identifikationsgebers zum Kraftfahrzeug bestimmen zu können.

Das erfindungsgemäße Verfahren dient zum Autorisieren des Zugangs zu einem Kraftfahrzeug mittels eines mobilen elektronischen Identifikationsgebers, welches mittels dieses Identifikations-gebers entsperrt werden kann. Der Identifikationsgeber ist mit dem Kraftfahrzeug sowohl mittels einer ersten drahtlosen Kommunikationsverbindung, die mit dem UWB-Standard arbeitet, als auch mittels einer zweiten drahtlosen Kommunikationsverbindung, die mit dem BLE-Standard arbeitet, datenübertragbar oder datenübertragend verbunden. Die erste drahtlose Kommunikationsverbindung ist dabei so ausgebildet, dass mit ihr ein momentaner Abstand des Identifikationsgebers zum Kraftfahrzeug ermittelt werden kann. Hierzu können gängige, dem einschlägigen Fachmann bekannte Verfahren, beispielsweise sogenannte "Ping-Poing"-Verfahren oder ein sogenanntes Polling-Verfahren angewandt werden. Diese Verfahren basieren darauf, dass durch Bestimmung der Signal-Laufzeit eines vom Identifikationsgeber zum Kraftfahrzeug oder umgekehrt vom Kraftfahrzeug zum Identifikationsgeber übertragenes Signal ein momentaner Abstand des Identifikationsgebers zum Kraftfahrzeug berechnet wird.

Eine vom Kraftfahrzeug aus gemessene maximale Reichweite der ersten Kommunikationsverbindung ist dabei geringer ist als eine ebenfalls vom Kraftfahrzeug aus gemessene maximale Reichweite der zweiten Kommunikationsverbindung.

Das erfindungsgemäße Verfahren umfasst drei Maßnahmen a), b) und c). Gemäß Maßnahme a) wird, bevorzugt vom Kraftfahrzeug, eine Abnahme der Signalstärke der zweiten Kommunikations-verbindung überwacht, während der Identifikationsgeber vom Kraftfahrzeug weg bewegt wird, so dass ein Abstand zwischen dem Kraftfahrzeug und dem Identifikationsgeber zunimmt. In der Praxis ist dies der Fall, wenn die den Identifikationsgeber mit sich führende Person - etwa der Fahrer des Kraftfahrzeugs - dieses nach dem Abstellen verlassen hat und sich vom Kraftfahrzeug entfernt. Die Überwachung der Signalstärke kann dabei im Kraftfahrzeug oder im Identifikationsgeber erfolgen. Gemäß einer weiteren Maßnahme b) wird die momentane Signalstärke der zweiten Kommunikationsverbindung als Referenzwert gespeichert, sobald die erste Kommunikationsverbindung zwischen Kraftfahrzeug und Identifikationsgeber deaktiviert oder unterbrochen wird. Dies ist typischerweise der Fall, wenn der Abstand zwischen Kraftfahrzeug und Identifikationsgeber die maximale Reichweite der ersten Kommunikationsverbindung überschritten hat. Aufgrund der größeren maximalen Reichweite der zweiten Kommunikationsverbindung bleibt diese zum Zeitpunkt der Deaktivierung bzw. Unterbrechung der ersten Kommunikationsverbindung typischerweise bestehen, sodass die Signalstärke der zweiten Kommunikationsverbindung zu diesem Zeitpunkt problemlos gemessen werden kann.

Wird der Identifikationsgeber zu einem späteren Zeitpunkt wieder zum Kraftfahrzeug hin bewegt - dies ist typischerweise der Fall, wenn der Fahrer des abgestellten Kraftfahrzeugs mit diesem wegfahren möchte - so wird erfindungsgemäß die deaktivierte erste Kommunikationsverbindung wieder aktiviert, sobald beim erneuten Hinbewegen des Identifikationsgebers zum Kraftfahrzeug die Signalstärke der zweiten Kommunikationsverbindung aufgrund des abnehmenden Abstands zwischen Kraftfahrzeug und Identifikationsgeber den gespeicherten Referenzwert überschreitet. Eine solche Überschreitung des Referenzwerts signalisiert, dass sich der Identifikationsgeber in Reichweite der ersten Kommunikationsverbindung befindet, sodass diese wieder zur Ermittlung des Abstands zwischen Kraftfahrzeug und Identitätsgeber - als Teil der Zugangsautorisierung zum Kraftfahrzeug - wieder zur Verfügung steht.

Zweckmäßig wird die erste Kommunikationsverbindung deaktiviert, wenn beim Wegbewegen des Identifikationsgebers vom Kraftfahrzeug die maximale Reichweite der ersten Kommunikations-verbindung überschritten wird. Denkbar ist aber auch, dass die erste Kommunikationsverbindung bereits zu einem früheren Zeitpunkt deaktiviert wird, etwa aufgrund eines sehr hohen elektrischen Leistungsverbrauchs des Identifikationsgebers, der erforderlich ist, um die erste Kommunikationsverbindung betreiben zu können. Um zu verhindern, dass ein im Identifikationsgeber vorhandener elektrischer Energiespeicher - typischerweise eine wiederaufladbare elektrische Batterie -, vollständig entladen wird, kann es daher sinnvoll sein, die erste Kommunikationsverbindung bereits zu deaktivieren, bevor deren maximale Reichweite erreicht wurde. Auch in diesem Fall kann aber gemäß den Maßnahmen b) und c) verfahren werden.

Besonders bevorzugt wird nach der in Maßnahme c) durchgeführten Reaktivierung der ersten Kommunikationsverbindung in einer auf Maßnahme c) folgenden Maßnahme d) mittels der ersten Kommunikationsverbindung - als Teil der Autorisierung des Zugangs zum Kraftfahrzeug für die den Identifikationsgeber mit sich führende Person - der momentane Abstand des Identifikationsgebers zum Kraftfahrzeug bestimmt. Dies ermöglicht es, in Abhängigkeit vom ermittelten Abstand verschiedene Aktionen im Kraftfahrzeug auszulösen.

Gemäß einer vorteilhaften Weiterbildung können vom Identifikationsgeber an das Kraftfahrzeug mittels der zweiten Kommunikationsverbindung Autorisierungsdaten an das Kraftfahrzeugübertragen werden, sobald der in Maßnahme d) ermittelte Abstand einen vorgegebenen Minimalwert unterschreitet.

Besonders bevorzugt kann also im oder am Kraftfahrzeug eine vorbestimmte Aktion ausgeführt werden, sobald der in Maßnahme d) ermittelte Abstand einen vorbestimmten Minimalwert unterschreitet bzw. unterschritten hat. In Weiterbildungen dieser Variante können auch zwei oder mehr solche Aktionen ausgeführt werden, wobei es denkbar ist, dass einer jeden einzelnen Aktion ein individueller Minimalwert des Abstands zugeordnet ist. Somit ergeben sich vielfältige Ausgestaltungsmöglichkeiten.

Besonders bevorzugt kann die vorbestimmte Aktion das Entriegeln wenigstens einer Fahrzeugtür des Kraftfahrzeugs umfassen oder sein. Dies führt zu einer deutlichen Komfortsteigerung, wenn die den Identifikationsgeber mit sich führende Person in das noch verriegelte Kraftfahrzeug einsteigen möchte, da dieses somit komfortsteigernd automatisch entriegelt werden kann, bevor die Person die Fahrzeugtür des Kraftfahrzeugs erreicht hat.

Zweckmäßig kann in Maßnahme b) der Referenzwert durch Mittelwertbildung der Signalstärke über einen vorbestimmten Zeitraum hinweg festgelegt werden. Dies kann sich als vorteilhaft erweisen, um zeitlich oder räumlich lokale Schwankungen in der gemessenen Signalstärke in der Art eines Tiefpasses zu kompensieren.

Als besonders zweckmäßig für diesen vorbestimmten Zeitraum hat sich ein Wert für der vorbestimmte Zeitraum von zwischen 1 Sekunde und 5 Sekunden, vorzugsweise von ungefähr 4,5 Sekunden, erwiesen.

Besonders bevorzugt kann der elektronische Identifikationsgeber Teil eines Smartphones sein. Da ein modernes Smartphone oftmals bereits datenübertragend sowohl mittels des BLE-Standards als auch mittels des UWB-Standards ausgebildet ist, kann daher ein kommerziell erhältliches Smartphone ohne Erweiterung dessen Hardware verwendet werden, um das erfindungsgemäße Verfahren durchzuführen.

Die Erfindung betrifft ferner eine Anordnung mit einem Kraftfahrzeug und mit einem mobilen elektronischen Identifikationsgeber, welcher mittels einer ersten drahtlosen Kommunikationsverbindung gemäß dem UWB-Standard und mittels einer zweiten drahtlosen Kommunikationsverbindung gemäß dem BLE-Standard mit dem Kraftfahrzeug kommunizieren kann oder kommuniziert.

Die erste drahtlose Kommunikationsverbindung ist dabei so ausgebildet, dass mit ihr ein momentaner Abstand des Identifikationsgebers zum Kraftfahrzeug ermittelt werden kann. Hierzu können gängige Verfahren, beispielsweise das sogenannte Polling-Verfahren, angewandt werden. Dieses Verfahren basiert darauf, dass durch Bestimmung der Signal-Laufzeit eines vom Identifikationsgeber zum Kraftfahrzeug oder umgekehrt vom Kraftfahrzeug zum Identifikationsgeber gesendeten Signals der momentane Abstand des Identifikationsgebers zum Kraftfahrzeug berechnet wird. Die Anordnung umfasst ferner eine im Kraftfahrzeug vorhandenen Steuerungs-/Regelungseinrichtung, die zur Durchführung des voranstehend erläuterten, erfindungsgemäßen Verfahrens eingerichtet/programmiert ist. Die voranstehend erläuterten Vorteile des erfindungsgemäßen Verfahrens übertragen sich daher auch auf die erfindungsgemäße Anordnung.

Gemäß einer bevorzugten Ausführungsform der Anordnung ist der elektronische Identifikationsgeber Teil eines Smartphones oder durch ein solches Smartphone gebildet. Da ein modernes Smartphone oftmals sowohl zur Datenübertragung mittels BLE-Standards als auch mittels UWB-Standards ausgebildet ist, kann ein kommerziell erhältliches Smartphone ohne Erweiterung der Hardware verwendet werden, um das erfindungsgemäße Verfahren durchzuführen.

Weitere wichtige Merkmale und Vorteile der Erfindung ergeben sich aus den Unteransprüchen, aus den Zeichnungen und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert, wobei sich gleiche Bezugszeichen auf gleiche oder ähnliche oder funktional gleiche Bauteile beziehen.

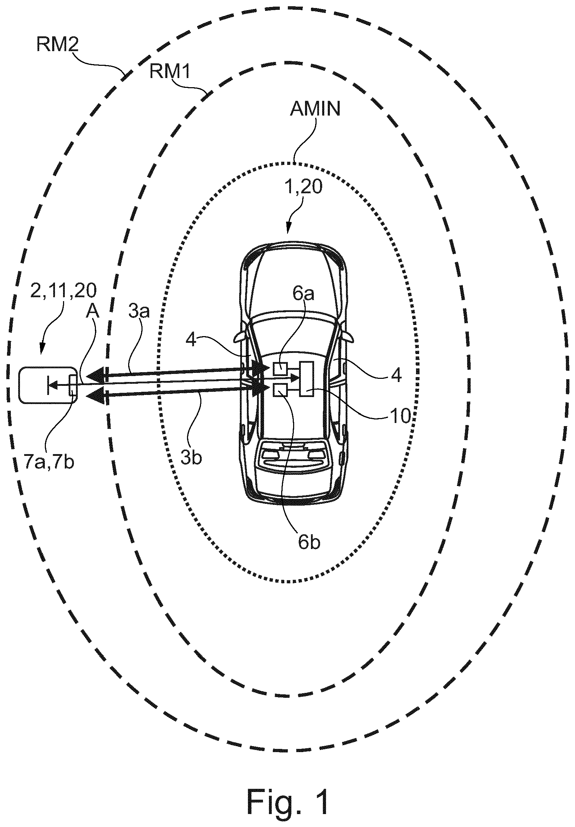

Die einzige Figur 1 illustriert ein Beispiel einer erfindungsgemäßen Anordnung 20 in einer Draufsicht. Die Anordnung 20 umfasst ein Kraftfahrzeug 1 mit Fahrzeugtüren 4, über welche der Zugang in einen Fahrzeuginnenraum des Kraftfahrzeugs 1 möglich ist. Das Kraftfahrzeug 1 umfasst eine Steuerungs-/Regelungseinrichtung 10, die zur Durchführung des erfindungsgemäßen Verfahrens eingerichtet/programmiert ist. Bei der Steuerungs-/Regelungseinrichtung 10 kann es sich um ein Steuergerät handeln, welches an einen im Kraftfahrzeug 1 vorhandenen Feldbus, etwa einen LIN- oder CAN-Bus, angeschlossen ist. Ferner umfasst die Anordnung 20 einen mobilen elektronischen Identifikationsgeber 2. Der elektronische Identifikationsgeber 2 kann Teil eines Smartphones 11 sein oder durch ein Smartphone 11 gebildet sein. Der Identifikationsgeber 2 ermöglicht eine automatische Autorisierung des Zugangs zum Kraftfahrzeug 1 im Zuge einer Annäherung des Identifikationsgebers 2 an das Kraftfahrzeug 1.

Der mobile Identifikationsgeber 2 kann mittels einer ersten drahtlosen Kommunikations-verbindung 3a gemäß dem UWB-Standard und mittels einer zweiten drahtlosen Kommunikationsverbindung 3b gemäß dem BLE-Standard mit der Steuerungs-/Regelungseinrichtung 10 des Kraftfahrzeugs 1 kommunizieren. Hierzu kann im Kraftfahrzeug 1 eine entsprechende, mit der Steuerungs-/Regelungseinrichtung 10 datenübertragend verbundene erste Sende- und Empfangseinrichtung 6a vorgesehen sein, welche über die erste Kommunikationsverbindung 3a mit einer entsprechenden, im Identifikationsgeber 2 vorhandenen ersten Sende- und Empfangseinrichtung 7a datenübertragend kommunizieren kann. Entsprechend kann im Kraftfahrzeug 1 eine mit der Steuerungs-/Regelungseinrichtung datenübertragend verbundene zweite Sende- und Empfangseinrichtung 6b vorgesehen sein, welche über die zweite Kommunikationsverbindungen 3b mit einer entsprechenden, im Identifikationsgeber 2 vorhandenen zweiten Sende- und Empfangseinrichtung 7b datenübertragend kommunizieren kann. Eine vom Kraftfahrzeug 1 aus gemessene erste maximale Reichweite RM1 der ersten Kommunikationsverbindung 3a vom Kraftfahrzeug 1 zum Identifikationsgeber 2 ist geringer als eine ebenfalls vom Kraftfahrzeug 1 gemessene zweite maximale Reichweite RM2 der zweiten Kommunikationsverbindung,3b vom Kraftfahrzeug 1. Die erste maximale Reichweite RM1 und die zweite maximale Reichweite RM2 sind in Figur 1 durch gestrichelte Linien angedeutet. Die gezeigten Reichweiten RM1 und RM2 sind nicht maßstäblich dargestellt.

Im Folgenden wird anhand der Figur 1 das erfindungsgemäße Verfahren beispielhaft erläutert.

Das Verfahren umfasst drei Maßnahmen a), b) und c).

Gemäß Maßnahme a) wird eine Abnahme der Signalstärke der zweiten Kommunikations-verbindung 3b überwacht, während der Identifikationsgeber 2 vom Kraftfahrzeug 1 weg bewegt wird, so dass der Abstand A zwischen Kraftfahrzeug 1 und Identifikationsgeber 2 zunimmt. In Maßnahme b) wird die momentane Signalstärke der zweiten Kommunikationsverbindung 3b als Referenzwert gespeichert, sobald beim Wegbewegen des Identifikationsgebers 2 vom Kraftfahrzeug 1 die maximale Reichweite RM1 der ersten Kommunikationsverbindung 3a überschritten wird. In diesem Fall wird die erste Kommunikationsverbindung 3a zwischen Kraftfahrzeug 1 und Identifikationsgeber 2 deaktiviert, wohingegen die zweite Kommunikationsverbindung 3b bestehen bleibt. Der Referenzwert kann durch Mittelwertbildung der Signalstärke über einen vorbestimmten Zeitraum hinweg festgelegt werden. Dieser vorbestimmte Zeitraum kann beispielsweise zwischen 1 Sekunde und 5 Sekunden, insbesondere ungefähr 4,5 Sekunden, betragen. Gemäß Maßnahme c) wird die deaktivierte erste Kommunikationsverbindung 3a wieder aktiviert, sobald beim erneuten Bewegen des Identifikationsgebers 2 zum Kraftfahrzeug hin die Signalstärke der zweiten Kommunikationsverbindung aufgrund des abnehmenden Abstands zwischen Kraftfahrzeug und Identifikationsgeber den gespeicherten Referenzwert wieder überschreitet.

Nach der in Maßnahme c) durchgeführten Reaktivierung der ersten Kommunikationsverbindung 3a kann einer auf Maßnahme c) folgenden Maßnahme d) mittels der ersten Kommunikationsverbindung 3a der aktuelle Abstand A des Identifikationsgebers 2 zum Kraftfahrzeug 1 bestimmt werden. Dabei können vom Identifikationsgeber 3 mittels der zweiten Kommunikationsverbindung 3b, vorzugsweise verschlüsselt, an das Kraftfahrzeug 1 Autorisierungsdaten übertragen werden, sobald der in Maßnahme d) ermittelte Abstand A einen vorgegebenen Minimalwert (AMIN) unterschreitet. Ebenso kann im Kraftfahrzeug 1 eine vorbestimmte Aktion ausgeführt werden, sobald der in Maßnahme d) ermittelte Abstand A den vorgegebenen Minimalwert AMIN (vgl. Figur 1) unterschritten hat. Diese vorbestimmte Aktion kann beispielsweise das Entriegeln der einer Fahrzeugtüren 4 des Kraftfahrzeugs 1 sein.

## Patentansprüche

1. Verfahren zum Autorisieren des Zugangs zu einem Kraftfahrzeug (1) mittels eines mobilen elektronischen Identifikationsgebers (2), welches mittels dieses Identifikationsgebers (2) entsperrt werden kann, wobei der Identifikationsgeber (2) mit dem Kraftfahrzeug (1) sowohl über eine erste drahtlose Kommunikationsverbindung (3a), die mit dem UWB-Standard arbeitet, als auch mittels einer zweiten drahtlosen Kommunikationsverbindung (3b), die mit dem BLE-Standard arbeitet, datenübertragend kommunizieren kann, wobei eine maximale Reichweite (RM1) der ersten Kommunikationsverbindung (3a) geringer ist als eine maximale Reichweite (RM2) der zweiten Kommunikationsverbindung, (3b),
wobei das Verfahren die folgenden Maßnahmen umfasst:
a) Überwachen einer Abnahme der Signalstärke (S) der zweiten Kommunikationsverbindung (3b), während der Identifikationsgeber (2) von Kraftfahrzeug (1) weg bewegt wird, so dass der Abstand (A) zwischen Kraftfahrzeug (1) und Identifikationsgeber (2) zunimmt,
b) Speichern der momentanen Signalstärke (S) der zweiten Kommunikationsverbindung (3b) als Referenzwert, sobald die erste Kommunikationsverbindung (3a) zwischen Kraftfahrzeug (1) und Identifikationsgeber (2) deaktiviert/unterbrochen wird,
c) Reaktivieren der ersten Kommunikationsverbindung (3a), sobald beim erneuten Hinbewegen des Identifikationsgebers (2) zum Kraftfahrzeug (1) die Signalstärke (S) der zweiten Kommunikationsverbindung (3b) aufgrund des abnehmenden Abstands (A) zwischen Kraftfahrzeug (1) und Identifikationsgeber (2) den gespeicherten Referenzwert überschreitet.

2. Verfahren nach Anspruch 1,
**dadurch gekennzeichnet, dass**
die erste Kommunikationsverbindung deaktiviert wird, wenn beim Wegbewegen des Identifikationsgebers (2) vom Kraftfahrzeug (1) die maximale Reichweite (RM1) der ersten Kommunikationsverbindung (3a) überschritten wird.

3. Verfahren nach Anspruch 1 oder 2,
**dadurch gekennzeichnet, dass**
nach der in Maßnahme c) durchgeführten Reaktivierung der ersten Kommunikations-verbindung (3a) in einer auf Maßnahme c) folgenden Maßnahme d) mittels der ersten Kommunikationsverbindung (3a) der momentane Abstand (A) des Identifikationsgebers (2) zum Kraftfahrzeug (1) bestimmt wird.

4. Verfahren nach Anspruch 3,
**dadurch gekennzeichnet, dass**
vom Identifikationsgeber (3) mittels der zweiten Kommunikationsverbindung (3b) Autorisierungsdaten an das Kraftfahrzeug (11) übertragen werden, sobald der in Maßnahme d) ermittelte Abstand (A) einen vorgegebenen Minimalwert (AMIN) unterschreitet.

5. Verfahren nach Anspruch 3 oder 4,
**dadurch gekennzeichnet, dass**
vom Kraftfahrzeug (1) wenigstens eine vorbestimmte Aktion ausgeführt wird, sobald der in Maßnahme d) ermittelte Abstand (A) den vorgegebenen Minimalwert (AMIN) unterschreitet, wobei vorzugsweise die wenigstens eine vorbestimmte Aktion das Entriegeln wenigstens einer Fahrzeugtür (4) des Kraftfahrzeugs (1) umfasst oder ist.

6. Verfahren nach einem der vorhergehenden Ansprüche,
**dadurch gekennzeichnet, dass**
in Maßnahme b) der Referenzwert durch Mittelwertbildung der Signalstärke (S) über einen vorbestimmten Zeitraum hinweg festgelegt wird.

7. Verfahren nach Anspruch 6,
**dadurch gekennzeichnet, dass**
der vorbestimmte Zeitraum zwischen 1 Sekunde und 5 Sekunden, vorzugsweise ungefähr 4,5 Sekunden beträgt.

8. Verfahren nach einem der vorhergehenden Ansprüche,
**dadurch gekennzeichnet, dass**
der elektronische Identifikationsgeber (2) Teil eines Smartphones (11) ist.

9. Anordnung (20),
- mit einem Kraftfahrzeug (1),
- mit einem mobilen elektronischen Identifikationsgeber (2), welcher mittels einer ersten drahtlosen Kommunikationsverbindung (3a) gemäß dem UWB-Standard und mittels einer zweiten drahtlosen Kommunikationsverbindung (3b) gemäß dem BLE-Standard mit dem Kraftfahrzeug kommunizieren kann oder kommuniziert,
- mit einer im Kraftfahrzeug (1) vorhandenen Steuerungs-/Regelungseinrichtung (10), die zur Durchführung des Verfahrens nach einem der vorhergehenden Ansprüche eingerichtet/programmiert ist.

10. Anordnung nach Anspruch 9,
**dadurch gekennzeichnet, dass**
der elektronische Identifikationsgeber (2) Teil eines Smartphones (11) ist oder durch ein Smartphone (11) gebildet ist.

## Claims

1. Method for authorizing access to a motor vehicle (1) by means of a mobile electronic identification transmitter (2), which motor vehicle can be unlocked by means of this identification transmitter (2), wherein the identification transmitter (2) can communicate with the motor vehicle (1) for data transmission, both via a first wireless communication connection (3a) operating according to the UWB standard and via a second wireless communication connection (3b) operating according to the BLE standard, wherein a maximum transmission range (RM1) of the first communication connection (3a) is less than a maximum transmission range (RM2) of the second communication connection (3b),
wherein the method comprises the following measures:
a) monitoring a decrease in the signal strength (S) of the second communication connection (3b) while the identification transmitter (2) is moved away from the motor vehicle (1), such that the distance (A) between the motor vehicle (1) and the identification transmitter (2) increases,
b) storing the current signal strength (S) of the second communication connection (3b) as a reference value as soon as the first communication connection (3a) between the motor vehicle (1) and the identification transmitter (2) is deactivated/interrupted,
c) reactivating the first communication connection (3a) when the identification transmitter (2) is moved back toward the motor vehicle (1), as soon as the signal strength (S) of the second communication connection (3b) exceeds the stored reference value due to the decreasing distance (A) between the motor vehicle (1) and the identification transmitter (2).

2. Method according to claim 1,
**characterized in that**
the first communication connection is deactivated if the maximum transmission range (RM1) of the first communication connection (3a) is exceeded when the identification transmitter (2) is moved away from the motor vehicle (1).

3. Method according to either claim 1 or claim 2,
**characterized in that,**
after the reactivation of the first communication connection (3a) carried out in measure c), in a measure d) following measure c), the current distance (A) from the identification transmitter (2) to the motor vehicle (1) is determined by means of the first communication connection (3a).

4. Method according to claim 3,
**characterized in that**
authorization data are transmitted from the identification transmitter (3) to the motor vehicle (11) by means of the second communication connection (3b) as soon as the distance (A) determined in measure d) falls below a predetermined minimum value (AMIN).

5. Method according to either claim 3 or claim 4,
**characterized in that**
at least one predetermined action is carried out by the motor vehicle (1) as soon as the distance (A) determined in measure d) falls below the predetermined minimum value (AMIN), wherein preferably the at least one predetermined action comprises or is the unlocking of at least one vehicle door (4) of the motor vehicle (1).

6. Method according to any of the preceding claims,
**characterized in that,**
in measure b), the reference value is determined by averaging the signal strength (S) over a predetermined period of time.

7. Method according to claim 6,
**characterized in that**
the predetermined period of time is between 1 second and 5 seconds, preferably approximately 4.5 seconds.

8. Method according to any of the preceding claims,
**characterized in that**
the electronic identification transmitter (2) is part of a smartphone (11).

9. Arrangement (20) comprising
- a motor vehicle (1),
- a mobile electronic identification transmitter (2) which can communicate or communicates with the motor vehicle by means of a first wireless communication connection (3a) in accordance with the UWB standard and by means of a second wireless communication connection (3b) in accordance with the BLE standard,
- an open/closed-loop control device (10) which is present in the motor vehicle (1) and is configured/programmed to carry out the method according to any of the preceding claims.

10. Arrangement according to claim 9,
**characterized in that**
the electronic identification transmitter (2) is part of a smartphone (11) or is formed by a smartphone (11).

## Revendications

1. Procédé permettant d'autoriser l'accès à un véhicule automobile (1) au moyen d'un transmetteur d'identification (2) électronique mobile, lequel véhicule automobile peut être déverrouillé au moyen dudit transmetteur d'identification (2), dans lequel le transmetteur d'identification (2) peut communiquer avec le véhicule automobile (1) par transmission de données aussi bien par l'intermédiaire d'une première liaison de communication (3a) sans fil qui fonctionne avec la norme ULB que par l'intermédiaire d'une seconde liaison de communication (3b) sans fil qui fonctionne avec la norme BLE, dans lequel une portée maximale (RM1) de la première liaison de communication (3a) est inférieure à une portée maximale (RM2) de la seconde liaison de communication (3b),
dans lequel le procédé comprend les étapes suivantes :
a) surveillance d'une diminution de l'intensité de signal (S) de la seconde liaison de communication (3b) pendant que le transmetteur d'identification (2) est éloigné du véhicule automobile (1), de sorte que la distance (A) entre le véhicule automobile (1) et le transmetteur d'identification (2) augmente,
b) mémorisation de l'intensité de signal (S) actuelle de la seconde liaison de communication (3b) comme valeur de référence dès que la première liaison de communication (3a) entre le véhicule automobile (1) et le transmetteur d'identification (2) est désactivée/interrompue,
c) réactivation de la première liaison de communication (3a) dès que, lors d'un nouveau déplacement du transmetteur d'identification (2) vers le véhicule automobile (1), l'intensité de signal (S) de la seconde liaison de communication (3b) dépasse la valeur de référence mémorisée en raison de la diminution de la distance (A) entre le véhicule automobile (1) et le transmetteur d'identification (2).

2. Procédé selon la revendication 1,
**caractérisé en ce que**
la première liaison de communication est désactivée lorsque la portée maximale (RM1) de la première liaison de communication (3a) est dépassée lors de l'éloignement du transmetteur d'identification (2) du véhicule automobile (1).

3. Procédé selon la revendication 1 ou 2,
**caractérisé en ce que**
après la réactivation de la première liaison de communication (3a) réalisée à l'étape c), à une étape d) suivant l'étape c), la distance (A) actuelle entre le transmetteur d'identification (2) et le véhicule automobile (1) est déterminée au moyen de la première liaison de communication (3a).

4. Procédé selon la revendication 3,
**caractérisé en ce que**
des données d'autorisation sont transmises au véhicule automobile (11) par le transmetteur d'identification (3) au moyen de la seconde liaison de communication (3b) dès que la distance (A) déterminée à l'étape d) est inférieure à une valeur minimale (AMIN) prédéfinie.

5. Procédé selon la revendication 3 ou 4,
**caractérisé en ce que**
au moins une action prédéterminée est exécutée par le véhicule automobile (1) dès que la distance (A) déterminée à l'étape d) est inférieure à la valeur minimale (AMIN) prédéfinie, dans lequel, de préférence, l'au moins une action prédéterminée comprend ou est le déverrouillage d'au moins une porte de véhicule (4) du véhicule automobile (1).

6. Procédé selon l'une des revendications précédentes,
**caractérisé en ce que**
à l'étape b), la valeur de référence est spécifiée en calculant la moyenne de l'intensité de signal (S) sur une période de temps prédéterminée.

7. Procédé selon la revendication 6,
**caractérisé en ce que**
la période de temps prédéterminée est comprise entre 1 seconde et 5 secondes, de préférence est d'environ 4,5 secondes.

8. Procédé selon l'une des revendications précédentes,
**caractérisé en ce que**
le transmetteur d'identification (2) électronique fait partie d'un mobile multifonction (11).

9. Agencement (20),
- comportant un véhicule automobile (1),
- comportant un transmetteur d'identification (2) électronique mobile qui peut communiquer ou communique avec le véhicule automobile au moyen d'une première liaison de communication (3a) sans fil selon la norme ULB et au moyen d'une seconde liaison de communication (3b) sans fil selon la norme BLE,
- comportant un dispositif de commande/régulation (10) présent dans le véhicule automobile (1) et configuré/programmé pour la réalisation du procédé selon l'une des revendications précédentes.

10. Agencement selon la revendication 9,
**caractérisé en ce que**
le transmetteur d'identification (2) électronique fait partie d'un mobile multifonction (11) ou est formé par un mobile multifonction (11).
